# EUROPEAN PATENT APPLICATION

(11) **EP 4 730 512 A1**
(43) Date of publication of application: **22.04.2026**
(21) Application number: 25199197.2
(22) Date of filing: 29.08.2025
(51) Int. Cl.: H01M 50/209, H01M 50/264, H01M 50/289, H01M 50/242

(54) **FIXING TAPE FOR BATTERY PACK AND BATTERY PACK TO WHICH FIXING TAPE IS APPLIED**

(30) Priority: 21.10.2024 KR 20240144433
(71) Applicant: SAMSUNG SDI CO., LTD., Yongin-si, Gyeonggi-do 17084 (KR)
(72) Inventor: CHOI, Woongil, 17084 Yongin-si (KR)
(74) Representative: Marks & Clerk LLP

(57) **Abstract**

A fixing tape for a battery includes: a tape body configured to be attached to a battery and a battery case accommodating the battery, to maintain a coupling state between the battery and the battery case, and to contact both the battery and the battery case; and an adhesive layer on one surface of the tape body, providing an adhesive force, and configured to be fixed to the battery and the battery case. The tape body has a through hole that blocks transmission of a tensile force generated when the battery moves relative to the battery case due to an external force to prevent the adhesive layer from being separated from the battery or the battery case.

## Description

### BACKGROUND

### 1. Field

Aspects of embodiments of the present disclosure relate to a fixing tape for a battery pack and a battery pack to which the fixing tape is applied.

### 2. Description of the Related Art

Different from a primary battery that is not designed to be (re)charged, a secondary battery is a battery that is designed to be charged and discharged. Low-capacity batteries are used in portable, small electronic devices, such as smartphones, feature phones, laptop computers, digital cameras, and camcorders, while large-capacity batteries are widely used as power storage batteries and motor driving power sources, such as for hybrid vehicles and electric vehicles. A secondary battery generally includes an electrode assembly including a positive electrode and a negative electrode, a case accommodating the same, and an electrode terminal connected to the electrode assembly.

A plurality of batteries may be gathered together to constitute an energy storage device having an increased voltage and/or current capacity. Categories of energy storage devices may include battery modules/packs used in vehicles and electrical device products.

A battery pack applied to a device, such as a laptop computer or a tablet PC, may be equipped with (or may include) a cylindrical battery, a prismatic battery, or a pouch-type battery. This battery pack may have a frame-shaped case, a plurality of battery cells embedded in (or accommodated in) the case, and a fixing tape for fixing the battery cells to the case. Content related to the corresponding battery pack may be printed on the fixing tape.

However, conventional battery pack can generate an unpleasant noise when the battery pack is pressed or twisted. The noise is generated when an adhesive surface of the fixing tape and the case or the adhesive surface and the battery cell are repeatedly detached and reattached. This noise can affect customer (or user) satisfaction and cause the customer (or user) to believe that the battery pack is damaged.

The above information disclosed in this Background section is for enhancement of understanding of the background of the present disclosure, and therefore, it may contain information that does not constitute a related (or prior) art.

### SUMMARY

A fixing tape having a structure that does not generate an unpleasant noise even when the battery pack is pressed or twisted and a battery pack to which the fixing tape is applied are desired. Embodiments of the present disclosure provide a fixing tape for a battery pack that may improve customer quality satisfaction by preventing noise generation when the battery pack is handled by having a perforation at an area at which noise is primarily (or intensively) generated and a battery pack to which the fixing tape is applied. For example, an aspect of the present invention relates to a fixing tape applied to a battery pack.

Embodiments of the present disclosure also provide a fixing tape for a battery pack in which, because a repetitive unsticking and re-attachment phenomenon at a noise generation area of the fixing tape is mitigated, an occurrence of an area in which an adhesive force of the fixing tape is lost or the attachment of introduced dust occurs is avoided, and a battery pack to which the fixing tape is applied.

According to an embodiment of the present disclosure, a fixing tape for a battery pack: includes a tape body concurrently (or simultaneously) attached to a battery and a battery case accommodating the battery; maintains a coupling state between the battery and the battery case, and contacts both the battery and the battery case; and includes an adhesive layer on one surface of the tape body, that provides an adhesive force, and that is fixed to the battery and the battery case. The tape body has a first through hole that blocks transmission of a tensile force generated when the battery moves relative to the battery case due to an external force to prevent the adhesive layer from being separated from the battery or the battery case. The tape body may have a width in contact with both the battery and the battery case. The adhesive layer may be stacked on one surface of the tape body.

According to another embodiment of the present disclosure, a fixing tape for a battery pack: includes a tape body concurrently (or simultaneously) attached to a battery and a battery case accommodating the battery; maintains a coupling state between the battery and the battery case, and contacts both the battery and the battery case; and includes an adhesive layer on one surface of the tape body, that provides an adhesive force, and that is fixed to the battery and the battery case. A non-adhesive portion that blocks transmission of a tensile force generated when the battery moves relative to the battery case due to an external force to prevent the adhesive layer from being separated from the battery or the battery case by the tensile force is provided in the one surface of the tape body. The tape body may have a width in contact with both the battery and the battery case. The adhesive layer may be stacked on one surface of the tape body.

According to another embodiment of the present disclosure, a battery pack includes: a battery; a battery case accommodating the battery; and a fixing tape. The fixing tape including a tape body concurrently (or simultaneously) attached to the battery and the battery case, maintains a coupling state between the battery and the battery case, and contacts both the battery and the battery case, and an adhesive layer, on one surface of the tape body, provides an adhesive force, and is fixed to the battery and the battery case. The tape body has a first through hole that blocks transmission of a tensile force generated when the battery moves relative to the battery case due to an external force to prevent the adhesive layer from being separated from the battery or the battery case by the tensile force.

At least some of the above and other features of the invention are set out in the claims.

Aspects and features of the present disclosure are not limited to those described above, and other aspects and features not specifically mentioned herein will be clearly understood by those skilled in the art from the description of the present disclosure below.

### BRIEF DESCRIPTION OF THE DRAWINGS

The above and other aspects and features of the present disclosure will become more apparent to those of ordinary skill in the art by describing embodiments thereof, in detail, with reference to the accompanying drawings, in which:
FIG. 1 is a schematic view of a pouch-type battery;
FIG. 2 is a cross-sectional view of a cylindrical battery;
FIG. 3A is an upper perspective view of a prismatic battery;
FIG. 3B is a cross-sectional view taken along the line A-A in FIG. 3A;
FIG. 4 is a view of a battery module;
FIG. 5 is a view of a fixing tape and a battery pack to which the fixing tape is applied according to embodiments of the present disclosure;
FIG. 6 is an enlarged cutaway perspective view of a first through hole in the fixing tape illustrated in FIG. 5;
FIG. 7 is a layout view of the fixing tape for the battery pack according to the embodiments of the present disclosure;
FIGS. 8A and 8B are views describing operation of the fixing tape illustrated in FIG. 7;
FIG. 9 is a layout view of a fixing tape according to other embodiments of the present disclosure;
FIGS. 10A and 10B are views of a fixing tape according to other embodiments of the present disclosure;
FIGS. 11A and 11B are views of a fixing tape according to other embodiments of the present disclosure;
FIGS. 12A and 12B are views of a fixing tape according to other embodiments of the present disclosure;
FIGS. 13A and 13B are views of a fixing tape according to other embodiments of the present disclosure;
FIG. 14 is a view describing a fixing tape according to other embodiments of the present disclosure;
FIG. 15 is a cross-sectional view taken along the line B-B in FIG. 14;
FIG. 16 is a layout view illustrating a fixing tape according to other embodiments of the present disclosure;
FIG. 17 is a cross-sectional view taken along the line C-C in FIG. 16; and
FIG. 18 is a view describing a method of applying the fixing tape illustrated in FIG. 16.

### DETAILED DESCRIPTION

Hereinafter, embodiments of the present disclosure will be described, in detail, with reference to the accompanying drawings.

The terms or words used in the present specification and claims are not to be narrowly interpreted according to their general or dictionary meanings but should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Further, to help understand the present disclosure, the accompanying drawings are not illustrated at actual scales, but dimensions of some components may be exaggerated. The same reference numerals designate the same elements in different embodiments.

References to two compared elements, features, etc. as being "the same" may mean that they are "substantially the same." Thus, the phrase "substantially the same" may include a case having a deviation that is considered low in the art, for example, a deviation of about 5% or less. In addition, if a certain parameter is referred to as being uniform in a given region, it may mean that it is uniform in terms of an average.

Although terms such as first and second are used to describe various components, but these components are not limited by these terms. These terms are used only to distinguish a first component from a second component, and it is obvious that the first component may be the second component unless otherwise stated.

Throughout the specification, unless otherwise stated, each element may be singular or plural.

Arranging an arbitrary element "above (or below)" or "on (or under)" another element may mean that the arbitrary element may contact the upper (or lower) surface of the element, and another element may also be interposed between the element and the arbitrary element located on (or under) the element.

Further, it will be understood that if an element is referred to as being "on," "connected to," or "coupled to" another element, it may be directly on, connected, or coupled to the other element, but still another element may be "interposed" between the elements, or the elements may be "connected to" or "coupled to" each other through still another embodiment.

As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list.

Throughout the specification, if "A and/or B" is stated, it means A, B or A and B, unless otherwise stated. When "C to D" is stated, it means C or more and D or less, unless otherwise specified.

When phrases such as "at least one of A, B and C," "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C.

As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below.

The terminology used herein is for the purpose of describing embodiments of the present disclosure and is not intended to limit the present disclosure.

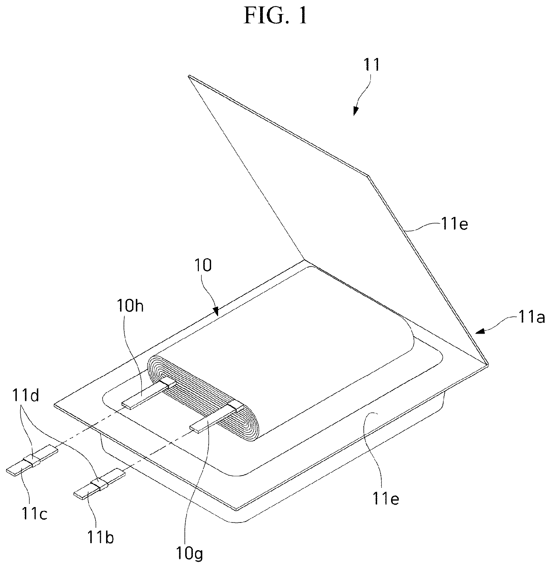

FIG. 1 is a schematic illustration of a pouch-type secondary battery 11.

The pouch-type secondary battery includes an electrode assembly 10 and a pouch 11a that accommodates the electrode assembly 10.

A first electrode tab 10h and a second electrode tab 10g of the electrode assembly 10 may be electrically connected to respective external first and second terminal leads 11c and 11b by welding. Each of the first terminal lead 11c and the second terminal lead 11b may be attached with a tab film 11d (e.g., may have a tab film 11d wrapped therearound) for insulation from the pouch 11a.

The pouch 11a may be sealed by having sealing parts 11e at the edges thereof that come into contact with each other to accommodate the electrode assembly 10 therein, in which case the sealing may be achieved with the tab film 11d interposed between the sealing parts 11e. The sealing parts 11e of the pouch 11a may each be made of a thermal fusion material that generally exhibits weak adhesion to metal. Thus, the pouch 11a may be fused by interposing the thin tab film 11d between the sealing parts 11e to ensure a sufficient seal.

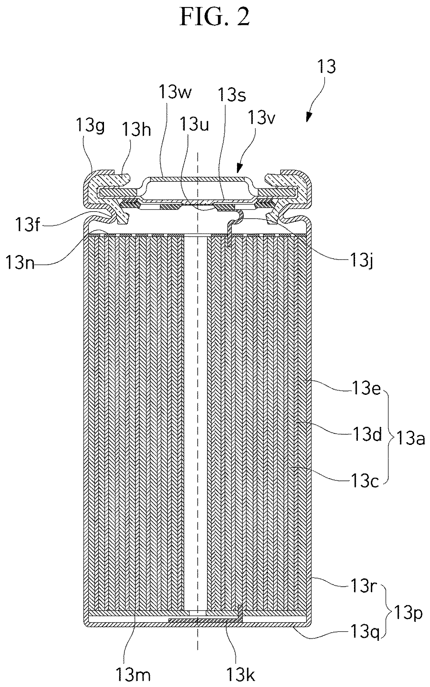

FIG. 2 illustrates a cylindrical battery 13. As shown in FIG. 2, the cylindrical battery includes an electrode assembly 13a, a case 13p accommodating the electrode assembly 13a and an electrolyte therein, a cap assembly 13v coupled to an opening in the case 13p to seal the case 13p, and an insulating plate 13n positioned between the electrode assembly 13a and the cap assembly 13v inside the case 13p.

The electrode assembly 13a may include a separator 13d and a first electrode 13c and a second electrode 13e with the separator 13d interposed therebetween and may be wound together in a jelly-roll shape.

The first electrode 13c includes a first substrate and a first active material layer on the first substrate. A first lead tab 13j may extend outwardly from a first uncoated portion of the first substrate at where the first active material layer is not located, and the first lead tab 13j may be electrically connected to the cap assembly 13v.

The second electrode 13e includes a second substrate and a second active material layer on the second substrate. A second lead tab 13k may extend outwardly from a second uncoated portion of the second substrate at where the second active material layer is not located, and the second lead tab 13k may be electrically connected to the case 13p. The first lead tab 13j and the second lead tab 13k may extend in opposite directions.

The first electrode 13c may act as a positive electrode. In such an embodiment, the first substrate may be made of, for example, an aluminum foil, and the first active material layer may include, for example, a transition metal oxide. The second electrode 13e may act as a negative electrode. In such an embodiment, the second substrate may be made of, for example, a copper foil or a nickel foil, and the second active material layer may include graphite, for example.

The separator 13d prevents a short circuit between the first electrode 13c and the second electrode 13e while allowing movement of lithium ions therebetween. The separator 13d may be made of, for example, a polyethylene film, a polypropylene film, a polyethylene-polypropylene film, or the like.

The case 13p accommodates the electrode assembly 13a and, together with the cap assembly 13v, forms the external appearance of the battery. The case 13p may have a substantially cylindrical body portion 13r and a bottom portion 13q connected to (e.g., extending from) one side of the body portion 13r. A beading part 13f deformed inwardly may be located in the body portion 13r, and a crimping part 13g bent inwardly may be formed at an open end of the body portion 13r.

The beading part 13f can reduce or prevent movement of the electrode assembly 13a inside the case 13p and can facilitate seating of a gasket 13h and the cap assembly 13v. The crimping part 13g may firmly fix the cap assembly 13v by pressing the edge of the cap assembly 13v against the gasket 13h. The case 13p may be formed of iron plated with nickel, for example.

The cap assembly 13v may be fixed to the inside of the crimping part 13g by the gasket 13h to seal the case 13p. The cap assembly 13v may include a cap up 13w, a safety vent 13s, a cap down, an insulating member, and a sub plate 13u but is not limited thereto and may be modified in various ways.

The cap up 13w may be positioned at the uppermost part of the cap assembly 13v. The cap up 13w may include a terminal part that protrudes upwardly and is configured to be connected to an external circuit, and an outlet for discharging gas may be arranged around the terminal part.

The safety vent 13s may be located under the cap up 13w. The safety vent 13s may include a protrusion part that protrudes convexly downwardly and is connected to the sub plate 13u, and at least one notch may be formed in the safety vent 13s around the protrusion part.

When excessive gas is generated due to, for example, overcharging or abnormal operation of the battery, the protrusion part of the safety vent 13s deforms upwardly due to the pressure and separates from the sub plate 13u while the safety vent 13s is cut (e.g., bursts) along the notch. The cut safety vent 13s may prevent the secondary battery from exploding by allowing the gas to be discharged to the outside.

The cap down may be below the safety vent 13s. The cap down may have a first opening for exposing the protrusion part of the safety vent 13s and a second opening for gas discharge. The insulating member may be positioned between the safety vent 13s and the cap down to insulate the safety vent 13s and the cap down.

The sub plate 13u may be under the cap down. The sub plate 13u may be fixed to a lower surface of the cap down to block the first opening in the cap down, and the protrusion part of the safety vent 13s may be fixed to the sub plate 13u. The first lead tab 13j, which is drawn out from the electrode assembly 13a, may be fixed to the sub plate 13u. Accordingly, the cap up 13w, the safety vent 13s, the cap down, and the sub plate 13u may be electrically connected to the first electrode 13c of the electrode assembly 13a.

The insulating plate 13n may be positioned to be in contact with the electrode assembly 13a below the beading part 13f. The insulating plate 13n may have a tab opening through which the first lead tab 13j is drawn out. The cap assembly 13v, which is electrically connected to the first electrode 13c by the first lead tab 13j, may face the electrode assembly 13a with the insulating plate 13n interposed therebetween and may maintain a state of being insulated from the electrode assembly 13a by the insulating plate 13n. Another insulating plate 13m may be included for insulation between the electrode assembly 13a and the bottom portion13q of the case 13p.

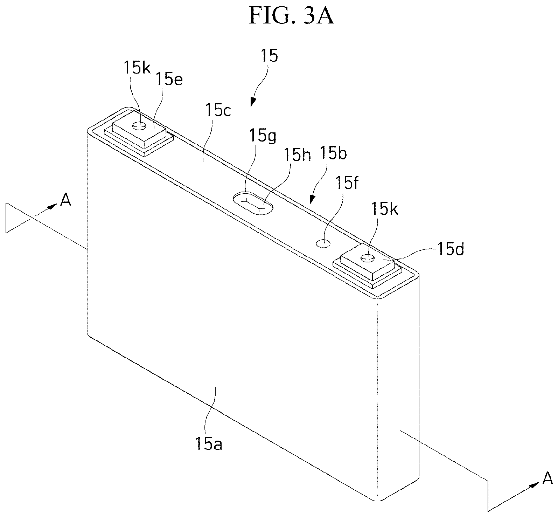

FIG. 3A is an upper perspective view of a prismatic battery 15.

A case 15a defines an overall appearance of the prismatic battery 15 and may be made of a conductive metal, such as aluminum, aluminum alloy, or nickel-plated steel. The case 15a may provide (or may form) a space for accommodating an electrode assembly therein.

A cap assembly 15b may include a cap plate 15c that covers an opening in the case 15a. In some embodiments, the case 15a and the cap plate 15c may be made of a conductive material. A first terminal 15d and a second terminal 15e may be electrically connected to respective positive and negative electrodes inside the case 15a and may be installed to protrude outwardly through the cap plate 15c.

The cap plate 15c may have an electrolyte injection port 15f and a gas discharge hole (e.g., a gas discharge opening) 15g, and a vent (e.g., a gas discharge device) 15h may be joined to (or arranged in) the gas discharge hole 15g. The gas discharge device 15h is opened (e.g., bursts) in response excessive gas generated inside the battery and acts to degas the battery.

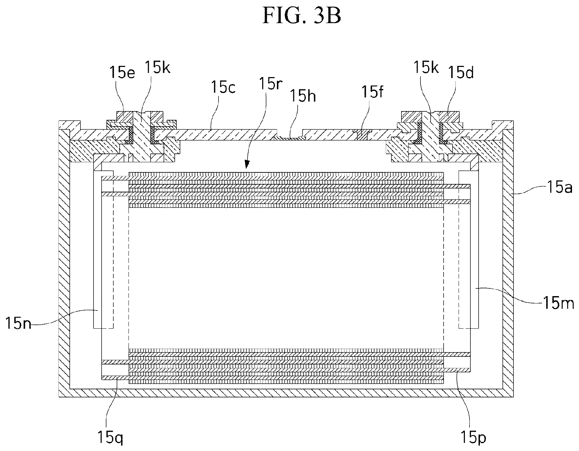

FIG. 3B is a cross-sectional view taken along the line A-A in FIG. 3A and illustrates an internal structure of the prismatic battery and a structure of the cap assembly shown in FIG. 3A.

An electrode assembly 15r may be formed by winding or stacking a stack of a first electrode plate, a separator, and a second electrode plate, which are formed as thin plates or films. When the electrode assembly 15r is a wound stack (e.g., a jelly-roll shape), a winding axis may be parallel to a longitudinal direction of the case 15a. The electrode assembly 15r may be a stack type rather than a winding type, but the shape of the electrode assembly 15r is not limited in the present disclosure.

In addition, the electrode assembly 15r may be a Z-stack electrode assembly in which a first electrode plate and a second electrode plate are inserted into both sides of a separator, which is then bent (or folded) into a Z-stack. In addition, one or more electrode assemblies may be stacked such that long sides of the electrode assemblies are adjacent to each other and accommodated together in the case, and the number of electrode assemblies in the case is not limited in the present disclosure. The first electrode plate of the electrode assembly 15r may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab (e.g., a first uncoated portion) that is a region to which the first electrode active material is not applied. The first electrode tab 15p may act as a current flow path between the first electrode plate and the first current collector 15m. In some embodiments, when the first electrode plate is manufactured, the first electrode tab 15p is formed by being cut in advance to protrude to one side of the electrode assembly 15r, or the first electrode tab 15p protrudes to one side of the electrode assembly 15r more than the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 15q (e.g., a second uncoated portion) that is a region to which the second electrode active material is not applied. The second electrode tab 15q may act as a current flow path between the second electrode plate and the second current collector 15n. In some embodiments, the second electrode tab 15q may be formed by being cut in advance to protrude to the other side (e.g., the opposite side) of the electrode assembly when the second electrode plate is manufactured, or the second electrode plate may protrude to the other side of the electrode assembly more than the separator without being separately cut.

FIG. 3B illustrates an embodiment in which the first electrode tab 15p and the second electrode tab 15q are located on a right surface and a left surface of the electrode assembly 15r, respectively, but in other embodiments, both the first electrode tab 15p and the second electrode tab 15q may be located on the right side or the left side of the electrode assembly 15r together.

The left surface and the right surface of the electrode assembly are based on the battery as oriented in FIG. 3B for convenience of description, and the left surface refers to a surface of a vertical surface of the electrode assembly 15r to which the second current collector 15n is joined, and the right surface, which is an opposite surface thereto, refers to a surface to which the first current collector 15m is joined. Thus, the terms used herein, such as the left surface and the right surface of the electrode assembly 15r, may be exchanged or reversed when the battery is rotated in a left-right direction or a vertical direction.

The separator prevents or substantially reduces instances of a short circuit between the first electrode plate and the second electrode plate while allowing movement of lithium ions therebetween. The separator may be made of, for example, a polyethylene film, a polypropylene film, a polyethylene-polypropylene film, or the like.

In some embodiments, the electrode assembly 15r is accommodated in the case 15a along with an electrolyte.

In the electrode assembly 15r, the first current collector 15m and the second current collector 15n may be welded and connected to the first electrode tabs 15p extending from the first electrode plate and the second electrode tabs 15q extending from the second electrode plate, respectively.

As illustrated in FIG. 3B, the first current collector 15m and the second current collector 15n are connected to the first terminal 15d and the second terminal 15e through connection members 15k, respectively. In some embodiments, the connection members 15k may each have an outer peripheral surface that is threaded and may be fastened to the first terminal 15d and the second terminal 15e by screwing. However, the present disclosure is not limited thereto. For example, the connection members 15k may be coupled to the first terminal 15d and the second terminal 15e by riveting or welding.

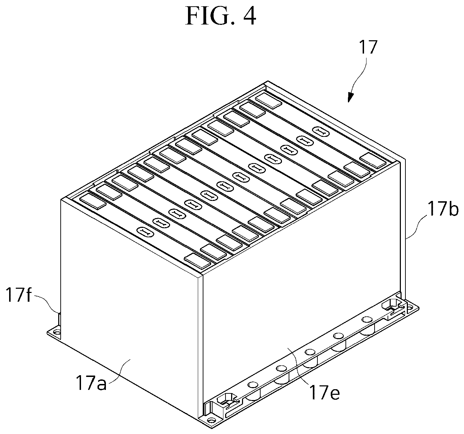

FIG. 4 is a view of a battery module 17 in which batteries are arranged. For application to electric vehicles, energy storage systems (ESS), and the like, the battery module is manufactured by arranging and connecting a plurality of batteries in a horizontal direction and/or a longitudinal direction. The plurality of batteries may be arranged in a space defined by a pair of facing end plates 17a and 17b and a pair of facing side plates 17e and 17f. An arrangement direction of the batteries and the number of the batteries may be determined or configured to obtain desired voltage and current specifications.

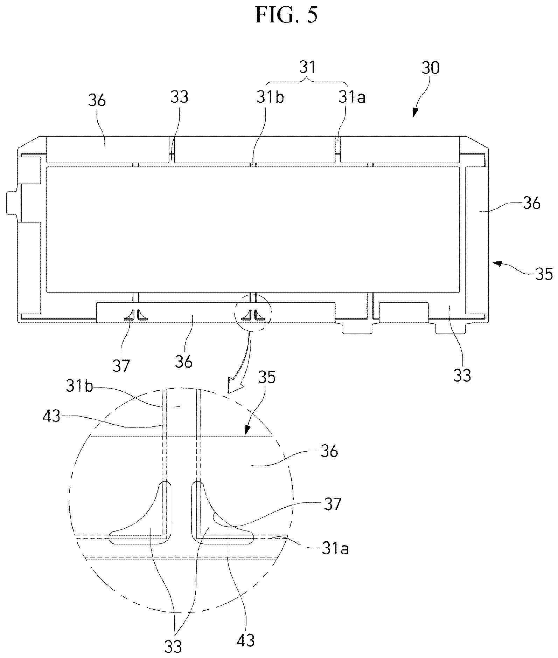

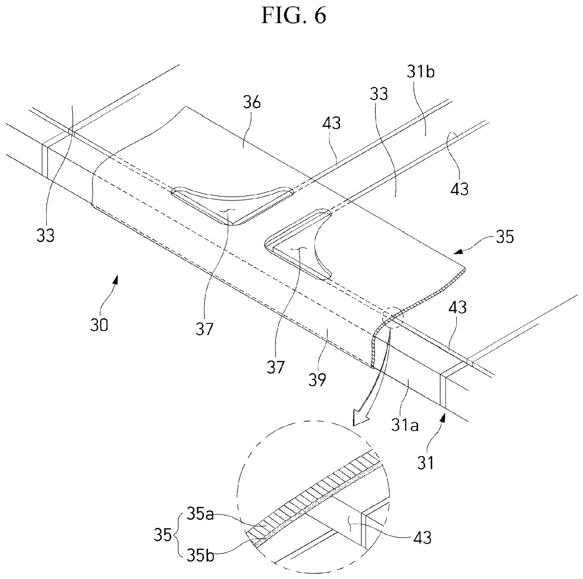

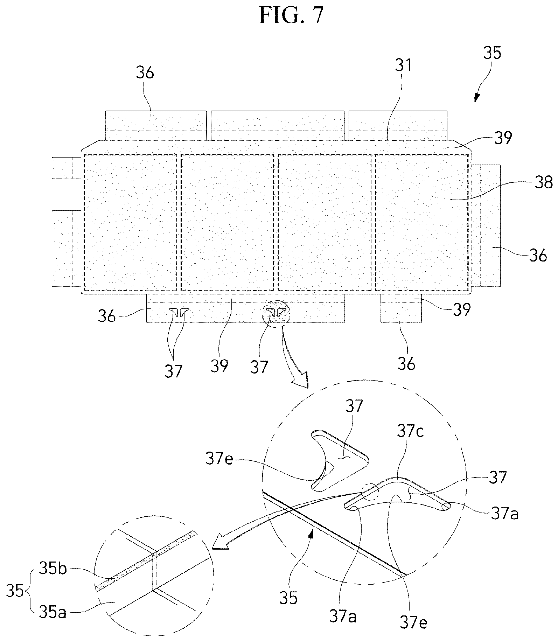

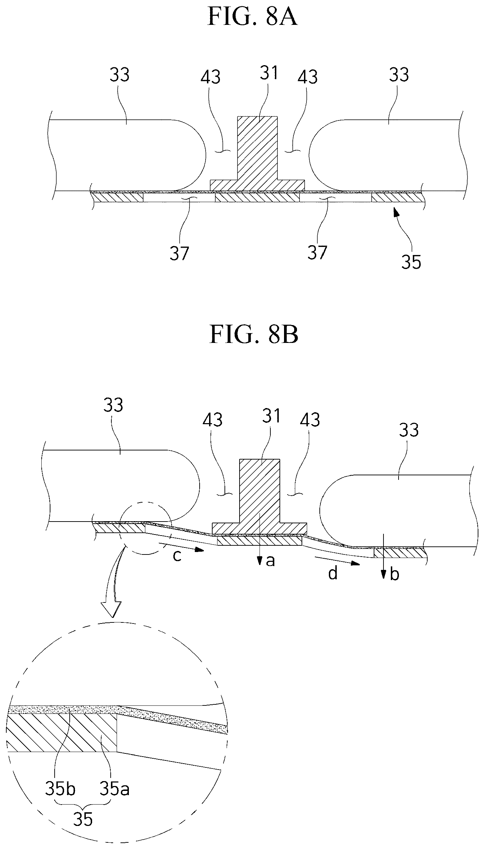

FIG. 5 is a view of a fixing tape 35 and a battery pack 30 to which the fixing tape is applied according to embodiments of the present disclosure, and FIG. 6 is an enlarged cutaway perspective view of a first through hole in the fixing tape illustrated in FIG. 5. Further, FIG. 7 is a development view (also known as a layout view) of the fixing tape for the battery pack, and FIGS. 8A and 8B are views for describing operation of the fixing tape illustrated in FIG. 7.

The battery pack 30, according to the embodiments, may include a battery case 31, a plurality of batteries 33, and the fixing tape 35. The battery pack 30 having such a configuration may be used as a power source for various electronic devices, such as a laptop computer. Further, a size of the battery pack 30 and a type and structure of the batteries 33 may be changed as desired. A rear surface of the battery pack 30 is illustrated in FIG. 5.

The battery case 31 may include a frame 31a and a plurality of supporters 31b. The battery case 31 may be manufactured by an injection molding method, but the present disclosure is not limited thereto. The frame 31a may have a slim rectangular shape. A hole, a groove, a step, or the like for fixing (e.g., routing) a wiring line, a substrate, or various terminals may be formed in the frame 31a.

The supporters 31b are members that divide an internal space of the frame 31a into a plurality of parts. The supporters 31b are parallel to each other and have opposite ends formed integrally with the frame 31a. A space between neighboring ones of the supporters 31b is a space for accommodating the battery 33, respectively. A longitudinal cross-sectional shape of the supporters 31b may have various shapes to safely and securely support the battery 33. The supporters 31b and the frame 31a provide a plurality of quadrangular areas surrounding the individual battery 33.

The battery 33 is fitted into a quadrangular area provided by the battery case 31 in a battery pack manufacturing operation. The battery 33, in the illustrated embodiment, is a pouch-type battery having a slim (or thin) quadrangular shape. However, the type of battery is not limited to the pouch-type battery as long as the battery may be fixed to the battery case by using the fixing tape. For example, the battery 33 may be a prismatic battery or a cylindrical battery.

The battery 33 is fitted into the quadrangular area and may be detached therefrom because the battery 33 is not bound by the battery case 31. For example, as illustrated in FIG. 6, the battery 33 and the frame 31a and the battery 33 and the supporters 31b are spaced apart from each other with a boundary part (also referred to as a boundary area) 43 interposed therebetween, and for example, when the battery 33 is not gripped by hand, the battery 33 is separated from the battery case 31.

The boundary part 43 is a spare gap designed in consideration of assemblability of the battery 33 with respect to the battery case 31. Because the battery case 31 and the battery 33 may be separated as described above, a member for fixing the battery 33 to the battery case 31 is included. The member is the fixing tape 35, which will be described below.

The fixing tape 35 may be a flexible fixing sheet member. A shape of the fixing tape 35 may reflect (e.g., may correspond to) a shape of the battery case 31. The shape of the fixing tape 35 is varied (or changed or designed) depending on the shape or size of the battery case 31. For example, the fixing tape 35 may have a shape as illustrated in FIG. 7. FIG. 7 is a development view (or a layout view) of the fixing tape 35 illustrated in FIG. 5.

The fixing tape 35 is concurrently (or simultaneously) attached to the battery 33 and the battery case 31 to maintain a coupled state between the battery 33 and the battery case 31. In the embodiment illustrated in FIG. 5, the fixing tape 35 does not cover the entire battery 33 and the entire battery case 31. However, in other embodiments, the fixing tape 35 may be cut (or formed) wider to completely surround and seal the battery 33 and the battery case 31.

A capacity, a manufacturer, a trademark, or the like of the battery pack 30 may be printed on an outer surface of the fixing tape 35. The outer surface is a surface opposite to an adhesive surface that adheres to the battery 33. The fixing tape 35 on which the printing content is displayed may be referred to as a "label tape."

The fixing tape 35 may include a tape body 35a and an adhesive layer 35b. The tape body 35a is a flexible member having a width and design (e.g., a shape) to come in contact with both the battery 33 and the battery case 31. A shape and size of the tape body 35a may be variously changed. Further, the adhesive layer 35b is stacked on one surface of the tape body 35a to provide an adhesive force.

FIG. 7 is a development view illustrating the fixing tape 35. In the illustrated embodiment, the fixing tape 35 may have a front surface contact part 38, a thickness surface contact part 39, and a rear surface contact part 36.

The front surface contact part 38 is a part that is in close contact with front surfaces of the battery 33 and the battery case 31. Further, the thickness surface contact part 39 is a part of the fixing tape 35 that is in surface contact with an outer surface of the frame 31a when the fixing tape 35 is folded at an angle of about 90 degrees so that the rear surface contact part 36 comes into close contact with the rear surface of the battery pack 30. Further, the rear surface contact part 36 is a part that is in close contact with the rear surface of the battery pack 30 when the remaining portion of the fixing tape 35 is folded at an angle of about 90 degrees with respect to the thickness surface contact part 39. FIG. 5 illustrates a state in which the front surface contact part 38 is adhered to the front surface of the battery pack 30, the thickness surface contact part 39 is adhered to an outer surface of the case, and the rear surface contact part 36 is adhered to the rear surface.

A plurality of first through holes (e.g., openings) 37 may be formed in the fixing tape 35 according to various embodiments. The first through holes 37 are holes (e.g., openings) formed in the fixing tape 35.

The first through holes 37 block (or prevent) transmission of a tensile force generated when the battery 33 moves relative to the battery case 31 in response to an external force. The first through holes 37 are applied to prevent the adhesive layer 35b from being unstuck from the battery 33 or the battery case 31 by the tensile force. The first through holes 37 are located at the boundary part 43 between the battery 33 and the battery case 31.

The "external force" may be a force applied by a handler when the battery pack 30 is handled. The handler applies a force (e.g., a pressing or twisting force) to the battery pack 30 to mount or separate the battery pack 30 to or from, for example, a narrow internal space of a laptop computer. When the applied force is excessive, an unsticking phenomenon of the fixing tape 35 may occur. The unsticking phenomenon is a phenomenon in which the fixing tape 35 stuck to (e.g., adhered to) the battery case 31 or the battery 33 is unstuck from the attached part due to the external force. The external force may be a tensile force.

The unsticking phenomenon can be prevented by blocking a force movement path through which the tensile force is transmitted. The first through holes 37 block the force movemnt path and, thus, prevent the unsticking phenomenon.

As illustrated in FIG. 5, the first through holes 37 may be formed in the rear surface contact part 36 of the fixing tape 35. For example, the first through holes 37 may be located at an area of the fixing tape 35 at which the frame 31a and the supporter 31b meet each other in the rear surface contact parts 36. The point at where the frame 31a and the supporter 31b meet each other is an area in which the tensile force, which will be described below, is concentrated.

In an embodiment, the first through holes 37 may have a bent shape corresponding to the shape of the corner portion of the battery 33. The first through holes 37 may open (e.g., may expose) a corner portion of the battery 33, a portion of the battery case 31, and the boundary part 43 in parts covered by the rear surface contact part 36. Because the corner portion of the battery 33 has a right angle, the first through holes 37 may have approximately L-shapes corresponding to the shape of the corner portion.

As illustrated in FIG. 7, the first through hole 37 may have (e.g., may be formed by) an end curved surface groove portion 37a, a central groove portion 37c, and a protruding round portion 37e. The end curved surface groove portion 37a and the central groove portion 37c may be rounded, curved grooves and prevent tearing due to an external impact caused by falling. Further, the central groove portion 37c is a portion for reducing or minimizing contact with a corner portion of the battery 33.

An operation (or effect) of the first through holes 37 will be described in more detail below with reference to FIGS. 8A and 8B.

FIG. 8A illustrates a state in which no external force is applied to the battery pack 30. Because there is no relative movement between the battery case 31 and the battery 33, an external force, such as a tensile force, is not applied to the fixing tape 35.

FIG. 8B is a schematic view illustrating a state in which a left battery 33 is not moved (e.g., is stationary), the battery case 31 is moved in a direction of the arrow a, and a right battery 33 is moved in a direction of the arrow b with respect to the battery case 31.

When the battery case 31 is lowered (e.g., is moved downwardly) in a state in which the left battery 33 is fixed in place, a tensile force in a direction of the arrow c is generated in a portion of the fixing tape 35 at where the battery 33 and the case 31 are connected. However, because the first through holes 37 are located along (or located in) a path through which the tensile force is applied, the tensile force is not directly transmitted to the battery 33 (e.g., is not transmitted through a shortest or direct path). The tensile force may be transmitted to the battery 33 by bypassing the first through holes 37. However, the bypassed tensile force is smaller than an inherent adhesive force of the adhesive layer 35b. Thus, as a result, the portion attached to the battery 33 is not detached.

Similarly, when the battery 33 depicted at the right side of the drawing is moved in the direction of the arrow b with respect to the fixed battery case 31, a tensile force in a direction of the arrow d is generated. Because a shortest action path of the tensile force in the direction of arrow b is blocked by the first through holes 37, the fixing tape 35 is not detached from the battery case 31. If the first through holes 37 are omitted, the tensile force is applied in the shortest (or direct) distance, and the fixing tape 35 adhered to the battery or the battery case is partially detached.

By preventing the unsticking phenomenon of the fixing tape 35, customer quality satisfaction is improved by preventing noise from being generated when the battery pack 30 is handled. Noise may occur when the fixing tape 35 is detached. Once the fixing tape 35 starts to be detached, an adhesive force gradually weakens, and thus, even when the battery pack 30 is moved a little, the battery pack 30 may be detached from the fixing tape 35 and generate sound. The first through holes 37 in the fixing tape 35, according to embodiments, reduce an adhesive area between the battery case 31 and the battery 33 (within a limit that does not reduce a structural strength) and prevent the unsticking phenomenon.

Further, because a repetitive unsticking and re-attachment phenomenon of the fixing tape 35 is avoided (or prevented), the occurrence of an area in which the adhesive force of the fixing tape 35 is lost and dust is introduced is also prevented.

The shapes of the first through holes 37 may be varied (or changed) as desired as long as the function thereof may be implemented. The first through holes 37 shown in FIG. 5 expose portions of the frame 31a, the supporters 31b, the battery 33, and the boundary part 43.

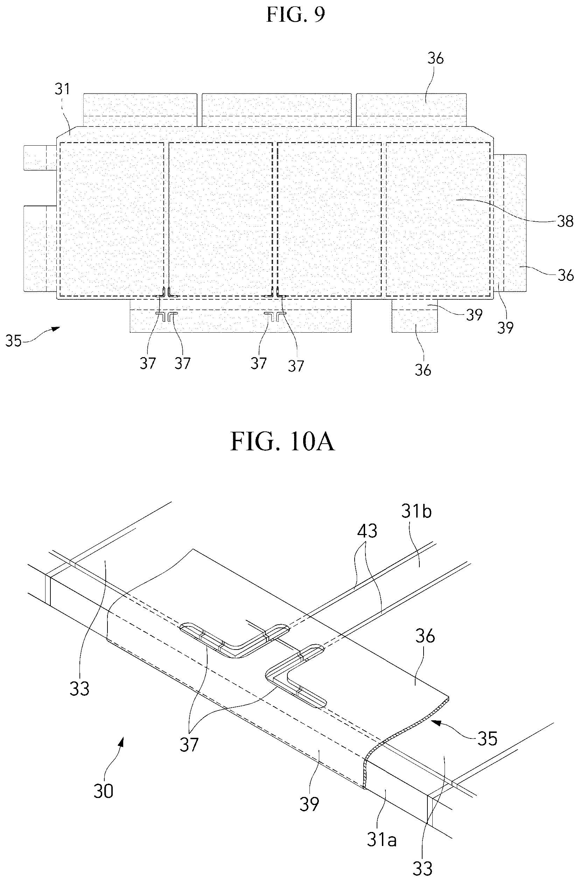

FIG. 9 is a view of a fixing tape according to another embodiment.

As illustrated in FIG. 9, the first through holes 37 may also be applied to (or may be formed in) an inner area of the front surface contact part 38. The first through holes 37 formed inside the front surface contact part 38 may have the same shape as the first through holes 37 formed in the rear surface contact part 36. When the fixing tape 35 is attached to the battery case 31 in which the battery 33 is fitted, the first through holes 37 in the front surface contact part 38 and the rear surface contact part 36 face each other with the battery 33 and the battery case 31 interposed therebetween.

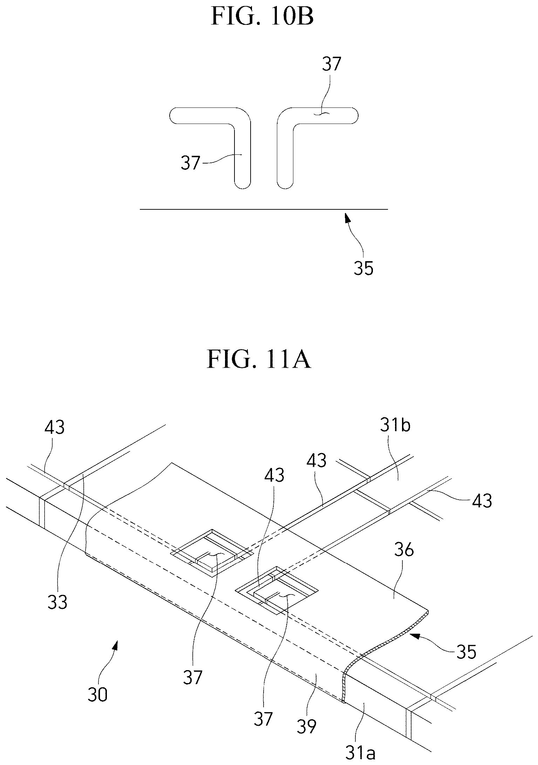

FIGS. 10A and 10B are views illustrating a fixing tape according to another embodiment.

As illustrated, the first through holes 37 may have L-shapes having a width (e.g., predetermined width). The width of the first through holes 37 may become wider or narrower.

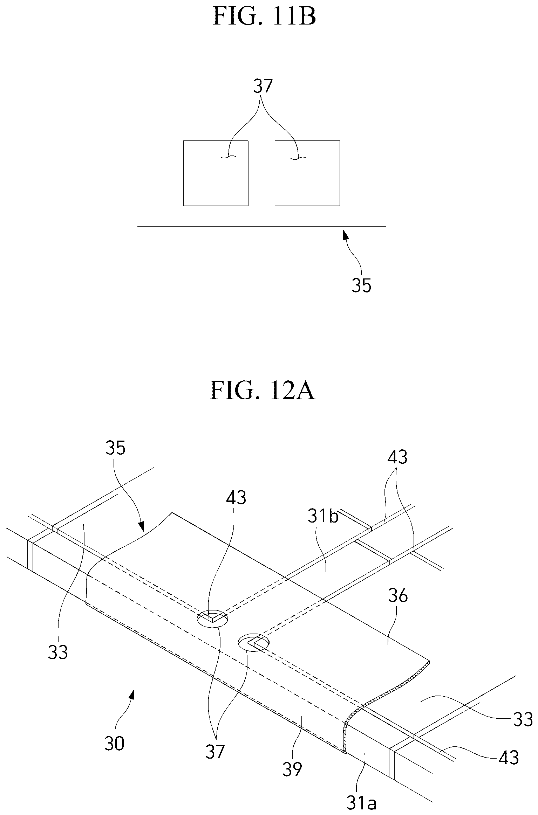

FIGS. 11A and 11B are views a fixing tape 35 according to another embodiment.

As illustrated, the first through holes 37 may have quadrangular shapes. In FIG. 11A, the first through holes 37 are implemented in quadrangular shapes, but the first through holes 37 may be implemented as other polygons, such as triangles, pentagons, and hexagons.

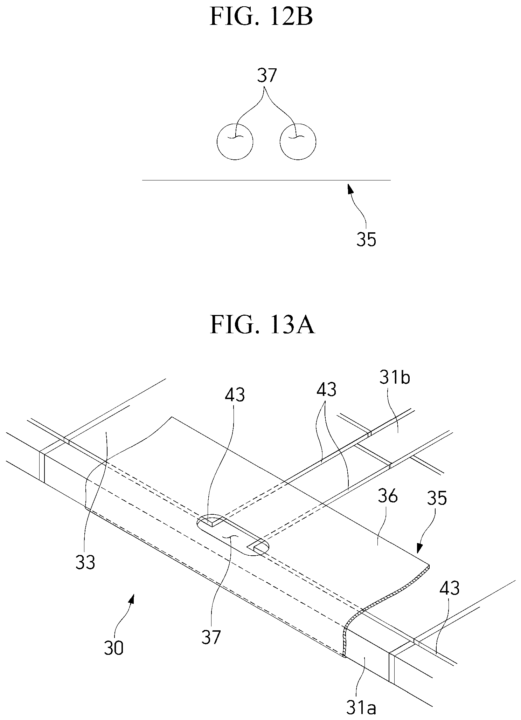

FIGS. 12A and 12B are views of a fixing tape according to another embodiment. The first through holes 37 in the fixing tape 35 illustrated in FIGS. 12A and 12B have circular shapes. Diameters of the circular first through holes 37 may be variously changed.

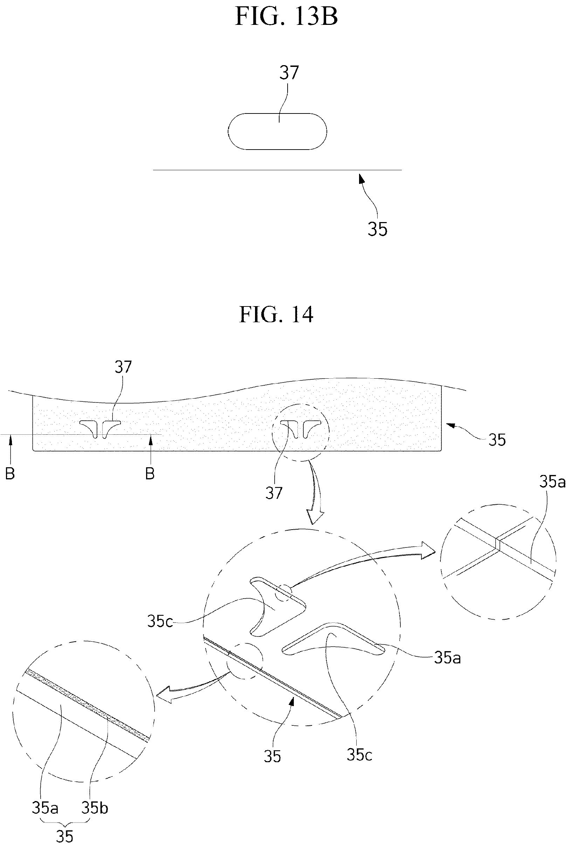

Further, the first through holes 37 in the fixing tape 35 shown in FIGS. 13A and 13B are implemented in elliptical shapes. The elliptical first through holes 37 may expose (e.g., simultaneously expose) the corner portions of two neighboring batteries 33.

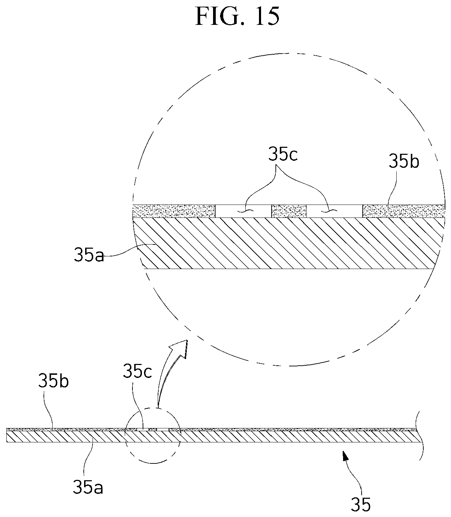

FIG. 14 is a view of a fixing tape according to another embodiment, and FIG. 15 is a cross-sectional view taken along the line B-B in FIG. 14.

The fixing tape 35 illustrated in FIGS. 14 and 15 has a non-adhesive portion 35c instead of the first through holes 37. The non-adhesive portion 35c may perform the same function as the first through holes 37.

The non-adhesive portion 35c is an area at where the tape body 35a is exposed because the adhesive layer 35b is not formed there. In other words, the non-adhesive portion 35c may correspond to an opening in the adhesive layer 35b. Because there is no adhesive layer at the non-adhesive portion 35c, and the tape body 35a does not have adhesive ability or characteristic, the battery 33 or the battery case 31 is separated from (e.g., is not adhered to) the non-adhesive portion 35c.

A location of the non-adhesive portion 35c may be the same as a location of the first through holes 37. For example, the non-adhesive portion 35c is located at the boundary part 43 between the battery 33 and the battery case 31. The non-adhesive portion 35c may prevent the fixing tape 35 from being detached from the battery 33 and/or the battery case 31 by a tensile force generated when an external force is applied to the battery pack 30. In addition, the battery 33 may have a quadrangular shape, and the non-adhesive portion 35c may have a shape corresponding to the corner portion of the battery 33.

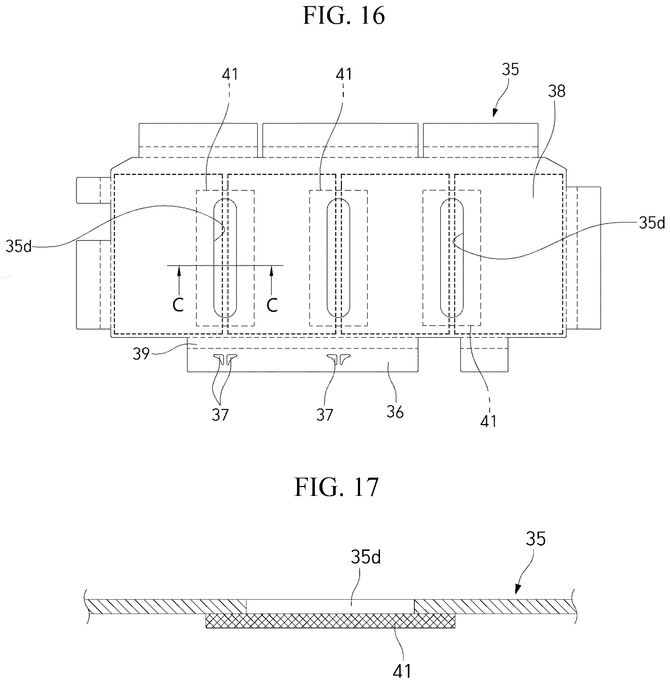

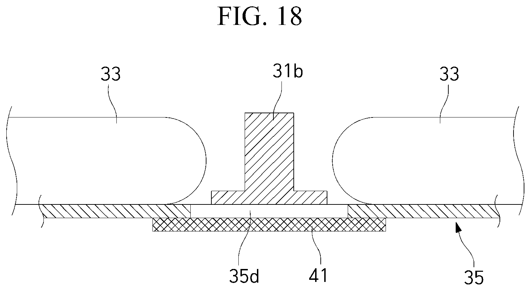

FIG. 16 is a view of a fixing tape according to another embodiment, and FIG. 17 is a cross-sectional view taken along the line C-C in FIG. 16. Further, FIG. 18 is a view describing a method of applying the fixing tape shown in FIG. 16.

As illustrated, a plurality of second through holes 35d may be formed in an inner area of the front surface contact part 38. The second through holes 35d may be elliptical holes through which portions of the supporters 31b of the battery case 31 are exposed to the outside. The shapes of the second through holes 35d may be changed as desired. In addition, the sizes or locations of the second through holes 35d may be changed as long as an edge of the battery 33, except for the corner portion thereof, may be exposed therethrough.

The second through holes 35d act similarly to the first through holes 37. For example, the second through holes 35d block (or prevent) transmission of a tensile force generated when the battery 33 moves relative to the battery case 31 in response to an external force, thereby preventing the adhesive layer 35b from being separated from the battery 33 or battery case 31 by the tensile force. Further, by preventing unsticking of the adhesive layer 35b, noise generation is prevented.

Further, a reinforcement patch 41 may be attached to the outer surface of the fixing tape 35. The reinforcement patch 41 may be a tape member of the same material as the fixing tape 35. The reinforcement patch 41 covers the second through holes 35d and prevents the second through holes 35d from being excessively opened (e.g., from being torn or expanded) by the tensile force. For example, damage, such as tearing or stretching, of opposite ends of the second through holes 35d may be prevented.

Although an adhesive is applied to an inner surface (e.g., a surface facing the supporter 31b) of the reinforcement patch 41, an adhesive surface of the reinforcement patch 41 may not adhere to the supporters 31b or the battery 33 due to a thickness of the fixing tape 35. For example, as illustrated in FIG. 18, the adhesive surface of the reinforcement patch 41 is physically spaced apart from the supporters 31b or the battery 33.

As described above, the fixing tape for a battery pack according to embodiments of the present disclosure can improve customer quality satisfaction by preventing noise generation when the battery pack is handled by having a perforation at a point where noise is primarily generated. Further, in the battery pack according to embodiments of the present disclosure, because the repetitive unsticking and re-attachment phenomenon at the noise generation point of the fixing tape is prevented, the occurrence of an area at where the adhesive force of the fixing tape is lost and/or dust is introduced is prevented.

As described above, a fixing tape for a battery pack according to embodiments of the present disclosure can improve customer quality satisfaction by preventing noise generation when the battery pack is handled by having a perforation at a point at where noise is primarily generated.

Further, in the battery pack according to embodiments of the present disclosure, because a repetitive unsticking and re-attachment phenomenon at a noise generation point of the fixing tape is prevented, occurrence of an area at where an adhesive force of the fixing tape is lost and/or dust is introduced is prevented.

Embodiments are set out in the following clauses:
Clause 1. A fixing tape for a battery pack, the fixing tape comprising:
   a tape body in contact with a battery case and a battery coupled to the battery case;
   an adhesive layer stacked on one surface of the tape body and configured to provide an adhesive force for fixing the tape body to the battery and the battery case; and
   a through hole formed in the tape body located at a boundary part between the battery and the battery case.
Clause 2. The fixing tape as claimed in clause 1, wherein the through hole exposes the boundary part between the battery and the battery case and blocks transmission of a tensile force generated when the battery moves relative to the battery case under an external force.
Clause 3. The fixing tape as claimed in claim 2, wherein a reinforcement patch configured to cover the through hole while fixed to the other side of the tape body and prevent damage to the fixing tape due to the tensile force is further attached to the fixing tape.
Clause 4. The fixing tape as claimed in any one of clauses 1 to 3, wherein the through hole has a size that exposes a portion of at least one of the battery case and the battery.
Clause 5. The fixing tape as claimed in any one of clauses 1 to 6, wherein the fixing tape has a front surface attachment part attached to a front surface of the battery and a rear surface attachment part attached to a rear surface of the battery while folded with respect to the front surface attachment part, and
   the first through hole is formed in both the front surface attachment part and the rear surface attachment part.
Clause 6. The fixing tape as claimed in any one of clauses 1 to 5, wherein the battery has a quadrangular shape, and
   the through hole includes a first through hole through which a corner portion of the battery is exposed.
Clause 7. The fixing tape as claimed in clause 6, wherein the through hole further includes a second through hole through which an edge of the battery except for the corner portion is exposed.
Clause 8. The fixing tape as claimed in clause 6 or clause 7, wherein the first through hole has a shape bent to correspond to a shape of the corner portion of the battery.
Clause 9. The fixing tape as claimed in any one of clauses 1 to 8, wherein the first through hole has a polygonal shape.
Clause 10. The fixing tape as claimed in any one of clauses 1 to 7, wherein the first through hole has a circular shape or an elliptical shape.
Clause 11. A fixing tape for a battery pack, the fixing tape comprising:
   a tape body having a width that is in contact with a battery case and a battery coupled to the battery case;
   an adhesive layer stacked on one surface of the tape body and configured to provide an adhesive force for fixing the tape body to the battery and the battery case; and
   a non-adhesive portion formed in the tape body located at a boundary part between the battery and the battery case.
Clause 12. The fixing tape as claimed in clause 11, wherein the non-adhesive portion is an area in which the adhesive layer is removed to prevent the tape body from adhering to the boundary part between the battery and the battery case, and blocks transmission of a tensile force generated when the battery moves relative to the battery case under an external force.
Clause 13. The fixing tape as claimed in clause 11 or clause 12, wherein the battery has a quadrangular shape, and the non-adhesive portion has a shape corresponding to a corner portion of the battery.
Clause 14. A battery pack comprising:
   a battery case accommodating a battery;
   the battery mounted inside the battery case; and
   a fixing tape including a tape body attached to the battery and the battery case, configured to maintain a coupling state between the battery and the battery case, and having a width in contact with the battery and the battery case, an adhesive layer stacked on one surface of the tape body and configured to provide an adhesive force for fixing the tape body to the battery and the battery case, and a through hole formed in the tape body located at a boundary part between the battery and the battery case.
Clause 15. The battery pack as claimed in clause 14, wherein the through hole exposes the boundary part between the battery and the battery case and blocks transmission of a tensile force generated when the battery moves relative to the battery case under an external force.
Clause 16. The battery pack as claimed in clause 14 or clause 15, wherein the through hole has a size that exposes a portion of at least one of the battery case and the battery.
Clause 17. The battery pack as claimed in any one of clauses 14 to 16, wherein the battery has a quadrangular shape, and
   the through hole includes a first through hole through which a corner potion of the battery is exposed.
Clause 18. The battery pack as claimed in clause 17, wherein the through hole further includes a second through hole through which an edge of the battery except for the corner portion is exposed.
Clause 19. The battery pack as claimed in any one of clauses 14 to 18, wherein a reinforcement patch configured to cover the through hole while fixed to the other side of the tape body and prevent damage to the fixing tape due to a tensile force is further attached to the fixing tape.
Clause 20. The battery pack as claimed in any one of clauses 14 to 19, wherein the fixing tape has a front surface attachment part attached to a front surface of the battery and a rear surface attachment part attached to a rear surface of the battery while folded with respect to the front surface attachment part, and
   the first through hole is formed in both the front surface attachment part and the rear surface attachment part.

Although the present disclosure has been described above with respect to embodiments thereof, the present disclosure is not limited thereto. Various modifications and variations can be made thereto by those skilled in the art within the scope of the present disclosure as defined by the appended claims and their equivalents.

## Claims

1. A fixing tape for a battery pack, the fixing tape comprising:
a tape body configured to contact a battery case and a battery accommodated in the battery case, the tape body having a through hole at a boundary area between the battery and the battery case; and
an adhesive layer on one surface of the tape body and configured to adhere the tape body to the battery and the battery case.

2. The fixing tape as claimed in claim 1, wherein the through hole exposes the boundary area between the battery and the battery case and blocks transmission of a tensile force generated when the battery moves relative to the battery case due to an external force.

3. The fixing tape as claimed in claim 1 or claim 2, further comprising a reinforcement patch fixed to another surface of the tape body and covering the through hole.

4. The fixing tape as claimed in any one of the preceding claims, wherein the through hole exposes a portion of at least one of the battery case and the battery.

5. The fixing tape as claimed in any one of the preceding claims, wherein the battery has a quadrangular shape, and
wherein the through hole comprises a first through hole through which a corner portion of the battery is exposed.

6. The fixing tape as claimed in claim 5, wherein the through hole further comprises a second through hole through which an edge of the battery other than the corner portion thereof is exposed.

7. The fixing tape as claimed in any one of the preceding claims, wherein the fixing tape has a front surface attachment part configured to be attached to a front surface of the battery and a rear surface attachment part configured to be attached to a rear surface of the battery while folded with respect to the front surface attachment part, and
wherein the first through hole is formed in both the front surface attachment part and the rear surface attachment part.

8. The fixing tape as claimed in any one of the preceding claims, wherein the first through hole has a bent shape corresponding to a shape of a corner portion of the battery.

9. The fixing tape as claimed in any one of the preceding claims, wherein the first through hole has a polygonal shape.

10. The fixing tape as claimed in any one of claims 1 to 8, wherein the first through hole has a circular shape or an elliptical shape.

11. A fixing tape for a battery pack, the fixing tape comprising:
a tape body in contact with a battery case and a battery accommodated in the battery case; and
an adhesive layer on one surface of the tape body and configured to adhere the tape body to the battery and the battery case,
wherein a non-adhesive portion is in the tape body at a boundary part between the battery and the battery case.

12. The fixing tape as claimed in claim 11, wherein the non-adhesive portion corresponds to an opening in the adhesive layer.

13. The fixing tape as claimed in claim 11 or claim 12, wherein the battery has a quadrangular shape, and
wherein the non-adhesive portion has a shape corresponding to a corner portion of the battery.

14. A battery pack comprising:
a battery;
a battery case accommodating the battery; and
a fixing tape comprising:
a tape body attached to the battery and the battery case, configured to maintain a coupling state between the battery and the battery case, and contacting the battery and the battery case,
an adhesive layer on one surface of the tape body and adhering the tape body to the battery and the battery case; and
a through hole or a non-adhesive portion in the tape body at a boundary area between the battery and the battery case.

15. The battery pack as claimed in claim 14, wherein the through hole or the non-adhesive portion exposes or releases a portion of at least one of the battery case and the battery.
